# FASCICULE DE BREVET EUROPEEN

(11) **EP 2 466 497 B1**
(45) Date de publication et mention de la délivrance du brevet: **14.02.2018**
(21) Numéro de dépôt: 11194438.5
(22) Date de dépôt: 20.12.2011
(51) Int. Cl.: G06F 17/30, G11B 27/34, H04N 21/414, H04N 21/431, H04N 21/482, G06F 3/0488, G06F 3/0481

(54) **Procédé d'affichage d'entités multimédia, programme d'ordinateur et dispositif d'affichage associés**
Anzeigeverfahren von Multimediaeinheiten, entsprechendes Computerprogrammprodukt und entsprechende Anzeigevorrichtung
Method for displaying multimedia entities, related computer program and display device

(30) Priorité: 20.12.2010 FR 1060844
(43) Date de publication de la demande: 20.06.2012
(73) Titulaire: Orange, 75015 Paris (FR)
(72) Inventeur: Cazoulat, Renaud, 35000 RENNES (FR); Ledunois, Valérie, 35890 LAILLE (FR)
(74) Mandataire: Regimbeau

(56) Documents cités:
- EP-A1- 2 192 498
- EP-A2- 2 159 678

## Description

L'invention concerne un procédé d'affichage d'entités multimédia, ainsi qu'un programme d'ordinateur et un dispositif d'affichage associés.

On utilise de plus en plus fréquemment de nos jours des dispositifs électroniques aptes au traitement des données qui permettent l'affichage d'entités multimédia de type variable, notamment des images, des séquences audio et/ou vidéo, ou encore du texte.

Du fait notamment du développement d'Internet, les sources d'entités multimédia sont de plus en plus nombreuses et fournies et il est donc nécessaire, lorsque l'on souhaite avoir accès à des entités multimédia d'un type donné ou sur un sujet donné, d'avoir recours à des recherches qui permettent d'obtenir, et ainsi de visualiser, les entités multimédia visées.

Les résultats de recherche sont en général présentés de manière relativement simple, typiquement sous forme d'une liste de résultats où apparaissent des liens hypertextes vers chaque résultat, ainsi qu'éventuellement une image également associée à celui-ci. Le document EP 2 192 498 A2 décrit un procédé d'affichage d'entités multimédia, au cours duquel un utilisateur parcourt un écran tactile avec son doigt, et les images sur lesquelles passe le doigt et qui correspondent à un critère de recherche sont rassemblées autour d'une icône représentant le critère de recherche.

Le document EP 2 159 678 A2 décrit un procédé d'affichage d'entités multimédia, au cours duquel un utilisateur peut toucher une zone d'une image, ce qui provoque l'affichage d'une ou plusieurs images liées à l'objet de la zone de l'image touchée par l'utilisateur. Dans ce document, la visualisation d'une image liée par un critère à une image de base est réalisée en touchant l'image de base et en glissant le doigt le long de l'écran pour faire apparaître l'image voulue. L'image apparaît à l'endroit où l'utilisateur relâche le doigt. Un aspect de l'invention est un procédé tel que défini dans la revendication indépendante 1. Un autre aspect est une dispositif comme défini dans la revendication 12. Un aspect supplémentaire est un programme d'ordinateur selon la revendication 11. D'autres modes de réalisation de l'invention sont spécifiés dans les revendications dépendantes attenantes.

Dans le contexte de l'invention, les résultats de recherche sont ainsi affichés sous forme d'empilements relatifs chacun à des critères spécifiques de recherche et qui permettent une prévisualisation des différentes entités multimédia correspondant aux divers critères considérés.

On peut prévoir dans ce cadre qu'en cas de sélection d'un premier empilement, est affiché un nouvel écran comprenant au moins une première image associée à une entité de la liste correspondant à l'empilement sélectionné et au moins un second empilement d'images associées à des entités multimédia répondant audit critère et à un critère additionnel.

On propose ici d'avoir accès de manière plus détaillée à un empilement précédemment affiché (c'est-à-dire à voir séparément des images précédemment empilées), tout en conservant des empilements liés à des critères additionnels, ce qui constitue une nouvelle manière de naviguer à travers les résultats de la recherche.

Le nouvel écran peut comprendre au moins une seconde image associée à une entité multimédia répondant à un critère connexe audit critère. La recherche selon ledit critère précédemment mentionnée peut impliquer un mot-clé et l'entité multimédia répondant au critère connexe peut alors être obtenue par recherche utilisant ledit mot-clé.

On propose ainsi à l'utilisateur des entités multimédia liées à l'empilement sélectionné.

En cas de sélection de la première image, l'entité associée à la première image est par exemple affichée en plein écran. Selon l'invention, il est par ailleurs prévu que l'affichage soit réalisé sur un écran tactile. Selon l'invention, la détection d'un mouvement d'étirement (en anglais *"pinch* out") au niveau du premier empilement peut alors provoquer la sélection du premier empilement. Ce mouvement est particulièrement intuitif, en particulier en lien au résultat de la sélection. La détection d'un mouvement d'étirement au niveau d'un empilement provoque un écartement progressif d'images de cet empilement les unes par rapport aux autres, ce qui permet de pré-visualiser le contenu de l'empilement.

Si la détection du mouvement d'étirement au niveau de l'empilement est interrompue avant atteinte d'un écartement prédéterminé, l'empilement est à nouveau affiché. L'utilisateur peut ainsi, après prévisualisation, interrompre la sélection en cours.

En revanche, si la détection du mouvement d'étirement atteint un écartement prédéterminé, le nouvel écran est affiché, c'est-à-dire que les images de l'empilement sélectionné sont réparties sur l'écran.

La détection d'un mouvement de pincement (en anglais "*pinch in*") sur le nouvel écran peut par ailleurs provoquer l'affichage de l'écran comprenant lesdits empilements correspondants.

La recherche mentionnée plus haut est par exemple effectuée au moyen d'une requête identifiant un site distant et comprenant au moins un mot-clé. La recherche est dans ce cas effectuée à travers un réseau, tel que par exemple le réseau Internet.

L'invention propose également un programme d'ordinateur comprenant des instructions pour la mise en oeuvre du procédé évoqué ci-dessus lorsque ce programme est exécuté par le processeur.

D'autres caractéristiques et avantages de l'invention apparaîtront à la lumière de la description qui suit, faite en référence aux dessins annexés dans lesquels :
- la figure 1 représente un dispositif apte à mettre en oeuvre la présente invention ;
- les figures 2 à 5 représentent des écrans successivement affichés dans une première phase de fonctionnement du dispositif ;
- les figures 6 à 9 représentent des écrans successivement affichés dans une seconde phase de fonctionnement du dispositif ;
- la figure 10 représente un exemple d'application de l'invention dans le cadre d'un guide de programme électronique ;
- les figures 11 à 13 représentent des écrans successivement affichés au cours d'une séquence de fonctionnement dans le cadre de la figure 10 ;
- les figures 14 et 15 représentent respectivement d'autres exemples d'écrans affichés dans le cadre de l'application visée à la figure 10.

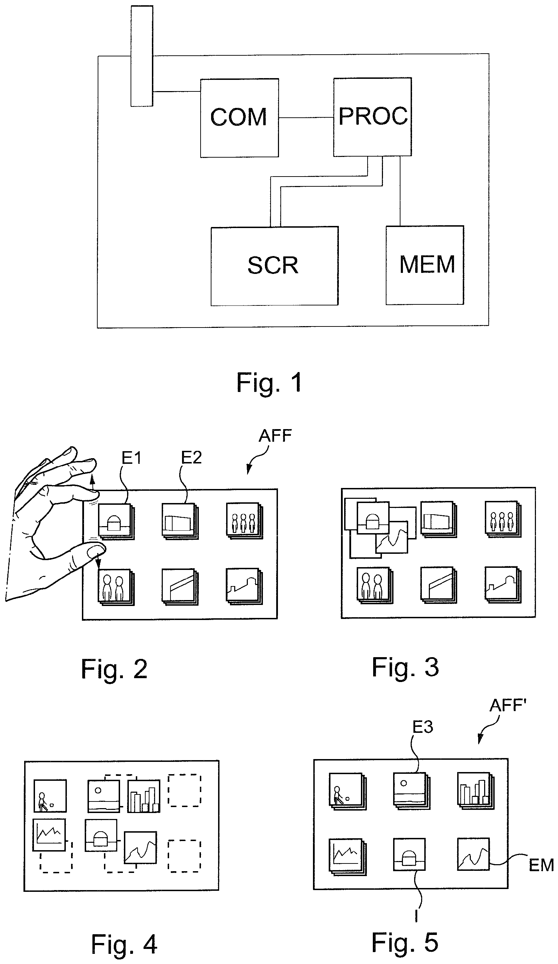

La **figure 1** représente les éléments principaux d'un dispositif d'affichage et de navigation parmi des données distantes, typiquement des données disponibles sur le réseau Internet. Il s'agit ici d'un téléphone cellulaire multifonction (couramment dénommé selon l'appellation anglo-saxonne "*smartphone*")*.* D'autres types de dispositif sont également envisageables tels que par exemple un ordinateur personnel, une tablette numérique ou un téléviseur.

Le dispositif de la figure 1 comprend un processeur PROC, une mémoire MEM, un écran SCR et un module de communication COM.

Le processeur PROC met en oeuvre les procédés décrits ci-après du fait de l'exécution en son sein de programmes d'ordinateur mémorisés par exemple dans la mémoire MEM. Comme décrit plus en détail ci-après, ces procédés permettent notamment l'affichage sur l'écran SCR d'objets multimédia mémorisés sous forme de fichiers dans la mémoire MEM et l'échange de données avec des sites distants à travers un réseau (les données reçues ou téléchargées étant par exemple elles aussi mémorisées dans la mémoire MEM).

Le dispositif décrit ici à titre d'exemple est donc à base de processeur. En variante, il pourrait utiliser un circuit électronique d'un autre type, par exemple un circuit intégré à application spécifique (ou ASIC). De manière générale, le dispositif est basé sur un circuit électronique qui permet de traiter des données (représentées sous forme binaire), notamment pour leur affichage sur l'écran SCR et leur échange avec des sites ou serveurs distants à travers le module de communication COM.

L'écran SCR est ici un écran tactile qui permet, en plus de l'affichage d'objets multimédia sous la commande du processeur PROC, de détecter la position d'un ou plusieurs doigts de l'utilisateur sur l'écran, à partir de quoi le processeur PROC peut déduire des commandes de l'utilisateur.

On pourrait toutefois en variante utiliser un autre type d'interface utilisateur tel qu'un clavier ou une souris (auquel cas la sélection d'un objet multimédia est par exemple réalisée en positionnant un curseur sur le l'objet multimédia concerné et en appuyant sur un bouton de sélection, ou *"clic"*)*.*

Le module de communication COM permet au processeur PROC d'établir une connexion avec des ordinateurs distants (ou serveurs distants) ou à travers un réseau informatique, typiquement le réseau Internet. Dans le cas présenté ici où le dispositif est un téléphone cellulaire, la communication entre le dispositif et l'ordinateur distant utilise d'une part le réseau cellulaire fourni par l'opérateur de téléphonie mobile jusqu'à un élément d'infrastructure du réseau cellulaire (comprenant notamment une station de base), qui est quant à lui relié à l'ordinateur distant via le réseau Internet.

En variante, d'autres moyens d'accès au processeur PROC à Internet peuvent être utilisés, tels que par exemple une connexion sans fil à un point d'accès Internet (par exemple selon la norme WiFi®).

On remarque que les exemples qui suivent sont présentés dans le cas d'un accès à des sites distants via le réseau Internet. L'invention s'applique toutefois également dans le cadre d'autres réseaux informatiques grâce auxquels des données sont disponibles au dispositif de la figure 1, tel que par exemple un réseau d'entreprise.

La **figure 2** représente un exemple d'écran AFF affiché dans le cadre du fonctionnement du dispositif de la figure 1.

Cet écran AFF comprend une pluralité d'empilements E1, E2 (ici six empilements) d'images associées chacune à un objet multimédia (disposés ici sous forme de grille). Dans l'exemple décrit ici, chaque empilement E1, E2 est affiché comme suit : une première image de l'empilement apparaît au premier plan (cette première image étant donc entièrement visible), une seconde image apparaît au second plan et légèrement décalée par rapport à la première image de sorte qu'une partie seulement de la seconde image est visible (la partie restante de la seconde image étant masquée par la première image), la troisième image apparaît au troisième plan derrière la première image et la seconde image et n'est donc elle aussi que partiellement visible, *etc.*

L'invention n'est toutefois pas limitée au type d'empilement présenté dans les figures et qui vient d'être décrit ; d'autres manières de présenter l'empilement des images sont envisageables, comme par exemple une représentation de l'empilement de photographies contenant ces images vues en perspective. Quoi qu'il en soit, l'empilement permet de représenter un ensemble d'images sur une surface réduite de l'écran (ici moins d'un sixième de l'écran) et séparée de la surface où sont représentés les autres empilements.

Chaque empilement E1, E2 contient les images associées à une liste d'entités multimédia sélectionnées par recherche, à travers un réseau (ici le réseau Internet), sur un ou plusieurs serveurs de contenu, par exemple avec spécification de mots-clés de délimitation de la recherche.

Ainsi, les entités électroniques représentées dans l'empilement E1, E2 sont celles répondant à des critères tels que le ou les sites où la recherche est effectuée, et le ou les mots-clés utilisés. Ces critères peuvent être définis par l'utilisateur (par exemple par saisie de l'adresse http du ou des sites et des mots clés), ou être déduits d'une étape antérieure de navigation comme cela sera expliqué plus en détail dans la suite.

Les images qui représentent les différentes entités multimédia sont déterminées de manière variable en fonction du type de l'entité multimédia concerné : si l'entité multimédia est une image, l'image affichée dans l'empilement est par exemple une miniature de l'entité multimédia ; si l'entité multimédia est une séquence vidéo, l'image est par exemple une image (éventuellement en format réduit) extraite de la séquence vidéo ; dans d'autres cas, une représentation symbolique peut être utilisée (telle qu'une image représentant des notes de musique pour une séquence audio et une image représentant un livre pour un fichier texte).

Comme représenté en traits pointillés en figure 2, l'utilisateur peut sélectionner un empilement particulier E1, ici en faisant un mouvement d'écartement (ou étirement) de deux doigts (en anglais "*pinch* out") au-dessus de l'empilement E1 concerné, ce qui déclenche l'affichage successif des écrans représentés aux **figures 3 à 5** et décrits à présent.

On peut d'ailleurs prévoir que, jusqu'à un écartement prédéterminé des doigts, le mouvement d'étirement provoque un écartement progressif des images de l'empilement E1 concerné.

Si l'écartement est interrompu (par retrait des doigts de l'utilisateur) avant d'atteindre l'écartement prédéterminé, on considère que l'utilisateur, après avoir visualisé les images grâce à leur écartement progressif, ne souhaite finalement pas sélectionner l'empilement E1, et on retourne donc à l'affichage de la figure 2.

Si au contraire l'écartement atteint l'écartement prédéterminé, on considère que l'empilement E1 est sélectionné.

Comme visible sur les figures 3 et 4, lorsqu'un empilement E1 (celui en haut à gauche sur les figures) est sélectionné, les images de l'empilement E1 (c'est-à-dire les images associées à des entités multimédia de la liste correspondant à l'empilement E1 sélectionné) se déplacent sur l'écran chacune vers le lieu où était précédemment affiché un empilement, et remplacent à cet endroit l'empilement précédemment affiché (qui disparaît peu à peu de l'affichage). Par exception, une image de l'empilement reste toutefois au niveau de l'empilement E1 sélectionné et ne se déplace donc pas.

On obtient alors un nouvel écran AFF' tel que représenté à la figure 5 ; à chaque endroit où était précédemment affiché un empilement, ce nouvel écran présente soit un nouvel empilement E3 associé à une nouvelle liste d'entités multimédia, soit une entité multimédia I, EM seule.

En effet, à la liste correspondant à l'empilement E1 précédemment sélectionné, on associe une pluralité de nouvelles listes (six nouvelles listes sur la figure 5) déterminées chacune par recherche basée sur des critères liés aux critères utilisés pour obtenir la liste précédemment sélectionnée. Par exemple, chaque nouvelle liste est obtenue par recherche sur la base des critères associés à la liste sélectionnée et d'un critère additionnel (différent pour chaque nouvelle liste).

On remarque que l'on peut prévoir un nombre de nouvelles listes supérieur au nombre d'empilements prévus sur l'écran, auquel cas un élément graphique (par exemple représenté sous forme d'empilement) présenté sur le nouvel écran permettra (lorsqu'il est sélectionné) de faire apparaître un écran présentant des empilements ou entités multimédia correspondant à d'autres listes de la pluralité.

Les différents critères additionnels sont par exemple pris dans des métadonnées contenues dans les entités multimédia de la liste sélectionnée ; certains critères additionnels peuvent ainsi être communs à une pluralité d'entités multimédia de la liste associée à l'empilement sélectionné.

Chaque nouvelle liste peut donc comprendre un élément (auquel cas une image associée à l'entité multimédia correspondante sera présentée sur l'écran) ou plusieurs éléments (auquel cas un nouvel empilement d'images associées à des entités multimédia comprises dans la nouvelle liste sera présenté à l'écran).

Une fois l'écran AFF' représenté à la figure 5 affiché, l'utilisateur pourra donc sélectionner (par exemple toujours au moyen d'un mouvement d'écartement de deux doigts) une entité multimédia I, EM ou un nouvel empilement E3.

Dans l'exemple décrit ici, la sélection d'une entité multimédia I, EM (affichée seule, et non dans un empilement) provoque le lancement (i.e. la reproduction) de cette entité multimédia I, EM , c'est-à-dire par exemple, si l'entité multimédia est une image I, l'affichage de cette image I en plein écran, ou, si l'entité multimédia EM est une séquence vidéo, le lancement de cette séquence vidéo.

Par ailleurs, chaque nouvel empilement E3 affiché étant un empilement du même type que ceux représentés en figure 2, chaque empilement E3 peut être sélectionné par l'utilisateur (par exemple toujours par un mouvement d'écartement des deux doigts au niveau de l'empilement concerné), ce qui provoquera à nouveau le processus présenté aux figures 3 à 5, cette fois pour le nouvel empilement sélectionné.

A l'inverse, si l'utilisateur demande un retour en arrière (par exemple par un mouvement de pincement de deux doigts, en anglais *"pinch* in", sur l'écran AFF' présenté en figure 5), le processeur commande le retour à l'écran AFF de la figure 2 (par exemple successivement par l'écran de la figure 4 puis celui de la figure 3).

La commande de retour en arrière permet ainsi de regrouper l'ensemble des entités multimédia affichées (sous forme d'entité multimédia unique EM ou d'empilement E3) dans un même empilement E1 (tel que celui présenté en haut à gauche en figure 2) et de faire apparaitre une pluralité d'autres empilements E2.

Une telle séquence (passage de la figure 5 à la figure 2) est d'ailleurs également possible même sans avoir au préalable parcouru cette séquence par l'ordre inverse (de la figure 2 à la figure 5 comme présenté ci-dessus). Dans ce cas, les empilements constitués, à côté de l'empilement formé par l'ensemble des entités multimédia présentés à l'écran lors de la commande de retour en arrière, sont par exemple déterminés par recherche en utilisant une partie seulement des critères associés à l'empilement reconstitué.

On peut ainsi naviguer de manière simple et agréable à travers un nombre important d'entités multimédia. On remarque d'ailleurs que cette navigation est rationnelle puisque les différents empilements sont formés par recherche au moyen de critères et qu'ils réunissent donc des entités multimédia d'une même thématique.

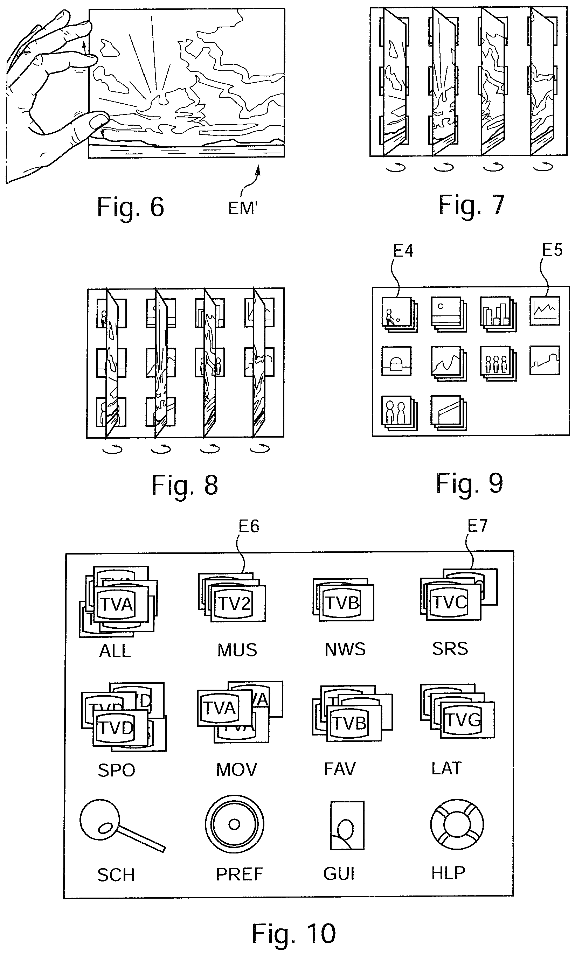

Les **figures 6 à 9** représentent une séquence du même type que celle précédemment présentés des figures 2 à 5, cette fois en débutant lors de la reproduction d'une entité multimédia EM' comme représenté en figure 6.

Ainsi, si l'utilisateur effectue un mouvement d'écartement des doigts (en anglais "*pinch out*") sur l'écran lors de la reproduction de l'entité multimédia, on détermine une pluralité de listes d'entités multimédia par recherche basée sur des critères propres à chaque liste, qui incluent par exemple pour chaque liste un ou plusieurs mots-clés présents en tant que métadonnées dans l'entité multimédia reproduite en figure 6.

Les critères de recherche sont variables d'une liste à l'autre de la pluralité : les mots-clés peuvent varier d'une liste à l'autre, ainsi que le médium ou site distant dans lequel les entités multimédia de la liste concernée sont recherchées.

On affiche alors, en remplacement de la reproduction de l'entité multimédia EM', une pluralité d'empilements E4 associés chacun à une des listes ainsi déterminées ; chaque empilement E4 contient des images associées à des entités multimédia de la liste concernée, comme représenté en figure 9.

Naturellement, si une liste ainsi déterminée contient un seul élément, une seule image E5 (et non un empilement d'images) est affichée.

On peut prévoir que le passage de l'écran de reproduction de l'entité multimédia EM' initiale à l'écran comprenant les empilements E4 associés aux listes déterminées par recherche soit réalisé avec une transition, comme par exemple un effacement progressif de l'écran de reproduction comme représenté aux figures 7 et 8.

On remarque que l'on peut, à l'aide des procédés de navigation qui viennent d'être proposés, naviguer sans limite entre différents écrans qui présentent soit des images (éventuellement empilées) associées à des entités multimédia, soit la reproduction d'une entité multimédia. On peut dans ce cas prévoir qu'une commande spécifique de l'utilisateur mette fin au processus de navigation (qui serait sinon infini).

La **figure 10** représente un écran proposé dans un exemple d'application de l'invention à un guide électronique de programme.

L'écran de la figure 10 présente une pluralité d'empilements E6, E7 comprenant chacun des images (ou imagettes) représentant chacune une chaîne vidéo disponible (c'est-à-dire accessible pour affichage par le dispositif).

Chaque empilement présente des images associées à des chaînes groupées sur la base d'un critère (ici thématique). Par exemple, au-dessus d'une mention MUS (pour musique) apparaît un empilement E6 d'images relatives à des chaînes dont le thème est la musique (chaînes TV1, TV2, TV3, TV4, TV5 dans la suite).

D'autres empilements E7 correspondent à d'autres thèmes (référencés par exemple NWS pour des chaînes d'informations, SRS pour des chaînes de séries, SPO pour des chaînes liées au sport, MOV pour des chaînes liées au cinéma).

On remarque que certaines chaînes (et par conséquent certaines images ou icônes représentant cette chaîne) peuvent apparaître dans plusieurs empilements : par exemple, l'empilement (référencé ALL) situé en haut à gauche de l'écran de la figure 10 réuni toutes les chaînes disponibles et on retrouve donc dans cet empilement la chaîne TVA également présente dans l'empilement relatif aux chaînes liées au thème du cinéma ; un empilement référencé FAV qui regroupe les chaînes favorites contient également la chaîne TVB présente dans l'empilement relatif aux chaînes d'informations (NWS).

La figure présente également un empilement relatif aux dernières chaînes regardées (référencé LAT).

On remarque que l'écran de la figure 10 présente en outre d'autres icônes associées à des fonctionnalités accessibles depuis cet écran, telle qu'une recherche parmi les chaînes (icône référencée SCH), un réglage des paramètres (icône PREF), un guide (icône GUI) et une fonction d'aide (HLP).

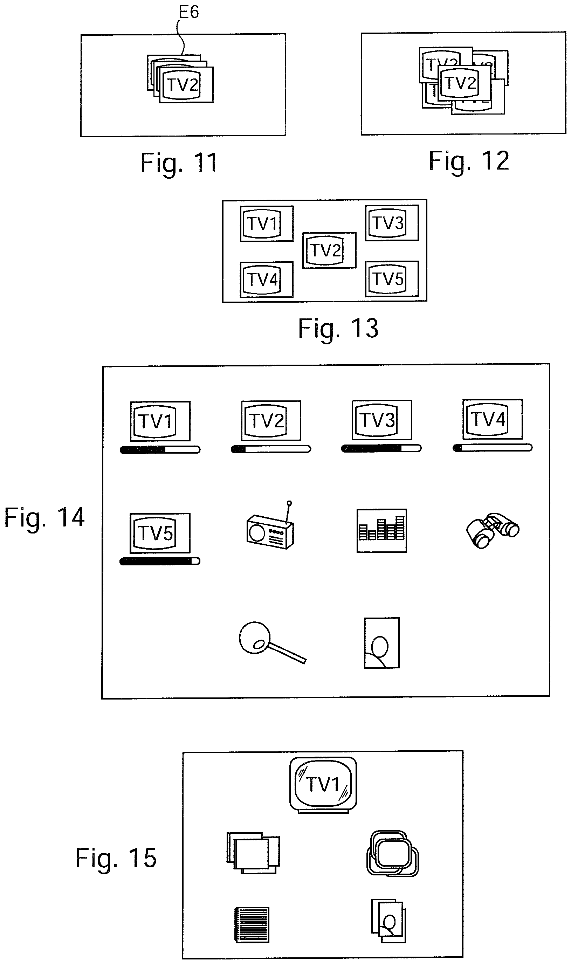

Lorsque l'utilisateur sélectionne l'un des empilements E6, E7 présentés sur la figure 10 (par exemple par un mouvement d'écartement de deux doigts au contact de l'écran SCR), les différentes images associées aux chaînes de l'empilement se répartissent sur l'ensemble de l'écran, en remplacement de l'écran précédent, comme illustré sur les **figures 11** à 13.

Comme illustré en **figure 13****,** l'écran affiche ainsi une pluralité d'images associées chacune à une chaîne disponible dans la thématique correspondant à l'empilement sélectionné (ici la musique).

Si l'utilisateur souhaite visualiser l'une des chaînes, il sélectionne cette chaîne par exemple à l'aide d'un nouveau mouvement d'écartement des doigts au niveau de l'image correspondant à la chaîne à sélectionner.

A l'inverse, si l'utilisateur n'est finalement intéressé par aucune des chaînes correspondant aux images affichées, il peut commander un retour en arrière, par exemple en effectuant un pincement de deux doigts sur l'écran. L'affichage revient alors par exemple à l'écran représenté en figure 10.

La **figure 14** représente une variante d'un écran affiché lors de la sélection d'un empilement (en lieu et place de l'écran de la figure 13).

Ainsi, en plus des images associées aux chaînes sélectionnées, on peut afficher par exemple à côté de chaque image, un indicateur de l'état d'avancement du programme en cours, ainsi qu'éventuellement le nom de la chaîne.

Comme représenté en figure 14, on peut en outre afficher des icônes associées à des entités multimédia sur le même sujet, telle que par exemple une icône permettant d'accéder à des radios numériques, une icône permettant d'accéder à un site distant fournissant de la musique, et/ou une icône de prévisualisation présentant une vue miniature et représentative d'une entité multimédia (image miniature, image extraite d'une vidéo ou image d'un album dont un titre est diffusé sur une radio numérique).

Lorsque l'utilisateur sélectionne l'une des chaînes proposées (que ce soit sur l'écran présenté en figure 13 ou sur l'écran présenté en figure 14), il est envisageable d'afficher un écran comprenant, en plus de la reproduction de la chaîne sélectionnée, une pluralité d'empilements d'images correspondant chacune à une entité multimédia associée à la chaîne sélectionnée ou au programme diffusé par celle-ci.

Par exemple, si la chaîne sélectionnée diffuse un morceau d'un groupe de musique donné, l'écran comprend par exemple un empilement formé d'images d'albums du groupe donné (dont la liste est déterminée par recherche sur un site spécialisé), un empilement formé d'images de livres ou magazines numériques dans lequel est mentionné le groupe donné (dont la liste est également déterminée par recherche sur un site dédié), un empilement formé d'images associées à des morceaux du groupe disponibles en ligne (encore une fois par recherche sur un site spécialisé), etc.

Les modes de réalisation qui précède ne sont que des exemples possibles de mise en oeuvre de l'invention, qui ne s'y limite pas.

## Revendications

1. Procédé d'affichage d'entités multimédia mis en oeuvre par un dispositif de traitement de données, **caractérisé en ce qu'**il comprend les étapes suivantes :
- détermination d'une pluralité de listes d'entités multimédia, chaque liste de la pluralité étant déterminée par recherche selon au moins un critère associé à ladite liste ;
- affichage, sur un écran (SCR) tactile, d'un écran (AFF ; AFF') comprenant, pour chaque liste déterminée, un empilement (E1, E2 ; E3 ; E4 ; E6, E7) correspondant d'images associées chacune à une entité de la liste concernée,
le procédé étant **caractérisé en ce que** la détection d'un mouvement d'étirement au niveau d'un empilement provoque un écartement progressif d'images de cet empilement les unes par rapport aux autres, et **en ce que** si la détection du mouvement d'étirement au niveau de l'empilement est interrompue avant atteinte d'un écartement prédéterminé, l'empilement est à nouveau affiché.

2. Procédé d'affichage selon la revendication 1, dans lequel, en cas de sélection d'un premier empilement (E1), est affiché un nouvel écran (AFF') comprenant au moins une première image (I) associée à une entité de la liste correspondant à l'empilement sélectionné (E1) et au moins un second empilement (E3) d'images associées à des entités multimédia répondant audit critère et à un critère additionnel.

3. Procédé d'affichage selon la revendication 2, dans lequel le nouvel écran (AFF') comprend au moins une seconde image associée à une entité multimédia (EM) répondant à un critère connexe audit critère.

4. Procédé d'affichage selon la revendication 3, dans lequel la recherche selon ledit critère implique un mot-clé et en ce que l'entité multimédia (EM) répondant au critère connexe est obtenue par recherche utilisant ledit mot-clé.

5. Procédé d'affichage selon l'une des revendications 2 à 4, dans lequel, en cas de sélection de la première image (I), l'entité associée à la première image (I) est affichée en plein écran.

6. Procédé d'affichage selon la revendication 1, dans lequel la détection d'un mouvement d'étirement au niveau du premier empilement (E1) provoque la sélection du premier empilement (E1).

7. Procédé d'affichage selon la revendication 1, dans lequel, si la détection du mouvement d'étirement atteint un écartement prédéterminé, le nouvel écran (AFF') est affiché.

8. Procédé d'affichage selon la revendication 1, dans lequel la détection d'un mouvement de pincement sur le nouvel écran (AFF') provoque l'affichage de l'écran comprenant lesdits empilements correspondants (E1, E2).

9. Procédé d'affichage selon la revendication 1, dans lequel, si la détection du mouvement d'étirement atteint un écartement prédéterminé, les images de l'empilement sélectionné sont réparties sur l'écran.

10. Procédé d'affichage selon l'une des revendications 1 à 9, dans lequel la recherche est effectuée au moyen d'une requête identifiant un site distant et comprenant au moins un mot-clé.

11. Programme d'ordinateur comprenant des instructions pour la mise en oeuvre du procédé selon l'une des revendications 1 à 10 lorsque ce programme est exécuté par le processeur.

12. Dispositif de traitement de données **caractérisé en ce qu'**il met en oeuvre le procédé d'affichage défini dans l'une des revendication 1 à 10.

## Patentansprüche

1. Verfahren zur Anzeige von Multimedia-Entitäten, das von einer Datenverarbeitungsvorrichtung durchgeführt wird, **dadurch gekennzeichnet, dass** es die folgenden Schritte enthält:
- Bestimmung einer Vielzahl von Listen von Multimedia-Entitäten, wobei jede Liste der Vielzahl durch Suche gemäß mindestens einem der Liste zugeordneten Kriterium bestimmt wird;
- Anzeige, auf einem Berührungsbildschirm (SCR), eines Bildschirms (AFF; AFF'), der für jede bestimmte Liste einen entsprechenden Stapel (E1, E2; E3; E4; E6, E7) von Bildern enthält, die je einer Entität der betroffenen Liste zugeordnet sind,
wobei das Verfahren **dadurch gekennzeichnet ist, dass** die Erfassung einer Auseinanderziehbewegung im Bereich eines Stapels einen Abstand von Bildern dieses Stapels zueinander bewirkt, und dass, wenn die Erfassung der Auseinanderziehbewegung im Bereich des Stapels vor dem Erreichen eines vorbestimmten Abstands unterbrochen wird, der Stapel erneut angezeigt wird.

2. Anzeigeverfahren nach Anspruch 1, wobei, im Fall der Auswahl eines ersten Stapels (E1), ein neuer Bildschirm (AFF') angezeigt wird, der mindestens ein erstes Bild (I), das einer Entität der Liste entsprechend dem ausgewählten Stapel (E1) zugeordnet ist, und mindestens einen zweiten Stapel (E3) von Bildern enthält, die Multimedia-Entitäten zugeordnet sind, die dem Kriterium und einem zusätzlichen Kriterium entsprechen.

3. Anzeigeverfahren nach Anspruch 2, wobei der neue Bildschirm (AFF') mindestens ein zweites Bild enthält, das einer Multimedia-Entität (EM) zugeordnet ist, die einem mit dem Kriterium verknüpften Kriterium entspricht.

4. Anzeigeverfahren nach Anspruch 3, wobei die Suche gemäß dem Kriterium ein Passwort impliziert, und dass die dem verknüpften Kriterium entsprechende Multimedia-Entität (EM) durch eine Suche unter Verwendung des Passworts erhalten wird.

5. Anzeigeverfahren nach einem der Ansprüche 2 bis 4, wobei, im Fall der Auswahl des ersten Bilds (I), die dem ersten Bild (I) zugeordnete Entität im Vollbildschirm angezeigt wird.

6. Anzeigeverfahren nach Anspruch 1, wobei die Erfassung einer Auseinanderziehbewegung im Bereich des ersten Stapels (E1) die Auswahl des ersten Stapels (E1) bewirkt.

7. Anzeigeverfahren nach Anspruch 1, wobei, wenn die Erfassung der Auseinanderziehbewegung einen vorbestimmten Abstand erreicht, der neue Bildschirm (AFF') angezeigt wird.

8. Anzeigeverfahren nach Anspruch 1, wobei die Erfassung einer Zusammenziehbewegung auf dem neuen Bildschirm (AFF') die Anzeige des die entsprechenden Stapel (E1, E2) enthaltenden Bildschirms bewirkt.

9. Anzeigeverfahren nach Anspruch 1, wobei, wenn die Erfassung der Auseinanderziehbewegung einen vorbestimmten Abstand erreicht, die Bilder des ausgewählten Stapels auf dem Bildschirm verteilt werden.

10. Anzeigeverfahren nach einem der Ansprüche 1 bis 9, wobei die Suche mittels einer Anfrage ausgeführt wird, die einen fernen Standort identifiziert und mindestens ein Passwort enthält.

11. Computerprogramm, das Anweisungen zur Durchführung des Verfahrens nach einem der Ansprüche 1 bis 10 enthält, wenn dieses Programm vom Prozessor ausgeführt wird.

12. Datenverarbeitungsvorrichtung, **dadurch gekennzeichnet, dass** sie das in einem der Ansprüche 1 bis 10 definierte Anzeigeverfahren anwendet.

## Claims

1. Method for displaying multimedia entities that is implemented by a data processing device, **characterized in that** it comprises the following steps:
- determining a plurality of lists of multimedia entities, each list of the plurality being determined by searching according to at least one criterion associated with said list;
- displaying, on a touchscreen (SCR), a screen (AFF; AFF') comprising, for each determined list, a corresponding stack (E1, E2; E3; E4; E6, E7) of images that are each associated with one entity of the list in question,
the method being **characterized in that** the detection of a stretching motion on a stack causes a gradual separation of images of this stack with respect to one another, and **in that** if the detection of the stretching motion on the stack is interrupted before reaching a predetermined degree of separation, the stack is displayed anew.

2. Display method according to Claim 1, in which, in the case of the selection of a first stack (E1), a new screen (AFF') is displayed comprising at least one first image (I) that is associated with an entity of the list corresponding to the selected stack (E1) and at least one second stack (E3) of images that are associated with multimedia entities meeting said criterion and one additional criterion.

3. Display method according to Claim 2, in which the new screen (AFF') comprises at least one second image that is associated with a multimedia entity (EM) meeting a criterion related to said criterion.

4. Display method according to Claim 3, in which the search according to said criterion involves a keyword and in that the multimedia entity (EM) meeting the related criterion is obtained by searching using said keyword.

5. Display method according to one of Claims 2 to 4, in which, in the case of the selection of the first image (I), the entity associated with the first image (I) is displayed in full screen mode.

6. Display method according to Claim 1, in which the detection of a stretching motion on the first stack (E1) causes the first stack (E1) to be selected.

7. Display method according to Claim 1, in which, if the detection of the stretching motion reaches a predetermined degree of separation, the new screen (AFF') is displayed.

8. Display method according to Claim 1, in which the detection of a pinching movement on the new screen (AFF') causes the screen comprising said corresponding stacks (E1, E2) to be displayed.

9. Display method according to Claim 1, in which, if the detection of the stretching motion reaches a predetermined degree of separation, the images of the selected stack are distributed across the screen.

10. Display method according to one of Claims 1 to 9, in which the search is carried out by means of a request identifying a remote site comprising at least one keyword.

11. Computer program comprising instructions for implementing the method according to one of Claims 1 to 10 when this program is run by the processor.

12. Data processing device **characterized in that** it implements the display method defined in one of Claims 1 to 10.
